# EUROPÄISCHE PATENTSCHRIFT

(11) **EP 1 215 030 B1**
(45) Veröffentlichungstag und Bekanntmachung des Hinweises auf die Patenterteilung: **03.08.2005**
(21) Anmeldenummer: 01126361.3
(22) Anmeldetag: 07.11.2001
(51) Int. Cl.: B29C 45/50, B29C 45/83

(54) **Einspritzgerät für eine Spritzgiessmaschine**
Injection unit for an injection moulding machine
Unité d'injection pour machine de moulage par injection

(30) Priorität: 02.12.2000 DE 10060087
(43) Veröffentlichungstag der Anmeldung: 19.06.2002
(73) Patentinhaber: Battenfeld GmbH, D-58540 Meinerzhagen (DE)
(72) Erfinder: Bleier, Harald, Ing., 2700 Wiener Neustadt (AT); Schaffer, Werner, Ing., 7022 Loipersbach (AT)

(56) Entgegenhaltungen:
- DE-A- 19 605 747
- GB-A- 1 094 037
- US-A- 4 290 701
- PATENT ABSTRACTS OF JAPAN vol. 1999, no. 10, 31. August 1999 (1999-08-31) -& JP 11 123748 A (TOYO MACH; METAL CO LTD), 11. Mai 1999 (1999-05-11) -& DATABASE WPI Week 199929 Derwent Publications Ltd., London, GB; AN 1999-341105 XP002232425 & JP 11 123748 A
- PATENT ABSTRACTS OF JAPAN vol. 2000, no. 5, 14. September 2000 (2000-09-14) -& JP 2000 052393 A (SUMITOMO HEAVY IND LTD), 22. Februar 2000 (2000-02-22)
- PATENT ABSTRACTS OF JAPAN vol. 2000, no. 10, 17. November 2000 (2000-11-17) -& JP 2000 190361 A (SUMITOMO HEAVY IND LTD), 11. Juli 2000 (2000-07-11)

## Beschreibung

Die Erfindung betrifft ein Einspritzaggregat für eine Spritzgießmaschine zur Verarbeitung von vorzugsweise thermoplastischem Material mit im wesentlichen einem Schneckenzylinder, einer Schnecke und einem aus zwei Elektromotoren bestehenden Schneckenantrieb,
wobei beide Motore zum Durchführen des Einspritz- und Dosiervorganges in elektrischer Regelverbindung stehen,
wobei die beiden Motore gleichzeitig in der selben oder einer gegenläufigen Drehrichtung betrieben werden können.

Vorrichtungen der gattungsgemäßen Art sind allgemein bekannt. So beschreibt beispielsweise die **JP 11123748A** und die **JP 2000 190361A** das Plastifizieren und Einspritzen über verschiedene Motoren. Die US-A-4 290 701 nutzt nur einen Motor zum Antreiben der Schnecke und ein Hydrauliksystem zum Einbringen der Schmelze. Zum Erzeugen eines Teiles aus thermoplastischem Material wird in einer Spritzgießmaschine granulierter Kunststoff plastifiziert, in einen Schneckenvorraum dosiert und ein Staudruck in der Schmelze aufgebaut. Im allgemeinen wird durch axiale Verschiebung der Schnecke die Schmelze in eine Werkzeugkavität eingespritzt und der Schmelzedruck gehalten, also ein Nachdruck aufgebaut, um die naturgemäße Materialschwindung auszugleichen. In der **EP 662 382** wird zum Beispiel ein Einspritzaggregat beschrieben, das über Elektromotore betrieben wird und ebenfalls den oben beschriebenen Spritzgießvorgang ermöglicht. Hier wird jedoch der Staudruck in der Schmelze über eine zusätzliche hydraulische Vorrichtung erzeugt. Nachteilig bei der bekannten Vorrichtung dieser elektrischen Spritzgießmaschinen ist, daß für die Erzeugung und Regelung des Staudruckes unter anderem ein eigenständiges hydraulisches System verwendet wird, welches durch seine Komplexität zwangsläufig mit hohen Kosten verbunden ist. Durch die Verwendung des elektrischen Direktantriebs, wo die Mutter integraler Bestandteil eines Motors ist, ist in Bezug auf die Kühlung, Wartung (Schmierung) sowie Servicearbeiten dieses System als nachteilig anzusehen.

Die Erfindung stellt sich daher die **Aufgabe** eine Vorrichtung zum Betreiben eines Einspritzaggregates bereitzustellen, das über die beiden Elektromotore alle erforderlichen Spritzgießvorgänge ermöglicht und keine zusätzliche hydraulische Vorrichtung erfordert, wobei eine wartungsfreundliche Konstruktion gewählt wird, die eine ausreichende Schmierung von Lagerstellen ermöglicht.

Die **Lösung** der Aufgabe durch die Erfindung ist dadurch gekennzeichnet, daß ein Raum (A) im wesentlichen durch mindestens zwei zueinander beweglich angeordnete Hülsen (14, 15) und einer jeweils angrenzenden Traverse (17) gebildet wird, um Schmieröl aufzunehmen, wobei die Hülsen (14, 15) ineinander gleitbar sind und die Verbindungen der den Raum (A) bildenden Teile (14, 15, 17) zur Umgebung mindestens schmiermitteldicht ausgeführt sind, wobei eine Verschiebung der Hülsen (14, 15) nur erfolgt, wenn ein Drehrichtungs- oder ein Drehzahlunterschied zwischen den mit den Motoren (6, 7) in Verbindung stehenden Riemenscheiben (2, 3) besteht. Bei axialer Bewegung der Schnecke schieben sich die Hülsen (14, 15) ineinander und verkleinern bzw. vergrößern den Raum (A).

Da der Raum (A) mit Schmiermittel gefüllt ist, wird durch Relativbewegung der Hülsen (14, 15), also einer Art Pumpbewegung, das Schmiermittel zu den Lagerstellen (16) gefördert.

Vorteilhafterweise sitzen die beiden Motore (6, 7) versetzt nebeneinander, so daß sie problemlos auf die Achse der Schnecke (13) wirken können. Es sind somit keine Umlenkungen erforderlich.

Weiterbildungsgemäß ist vorgesehen, daß eine Kupplung (11) zwischen Schnecke (13) und Spindeleinheit vorgesehen ist, die während der Axialbewegung der Spindel (4) ein Rotieren der Schnecke (13) verhindert. Die Kupplung (11) kann elektrisch aber auch hydraulisch angesteuert werden.

In den Zeichnungen ist ein Ausführungsbeispiel der Erfindung dargestellt.
- Fig. 1: zeigt eine perspektivische Darstellung des Einspritzaggregates, und in
- Fig. 2: ist schematisch ein Schnitt durch die Spindeleinheit gezeigt.

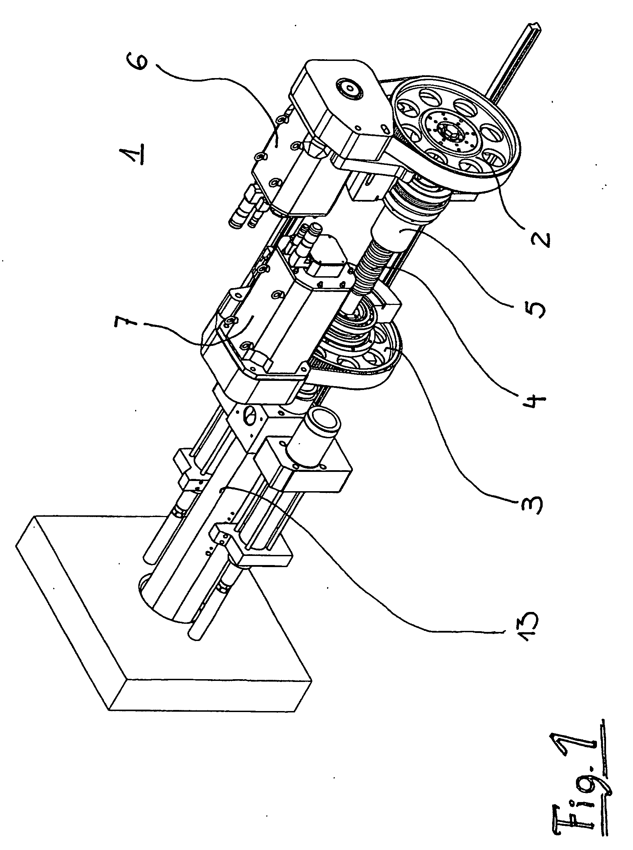

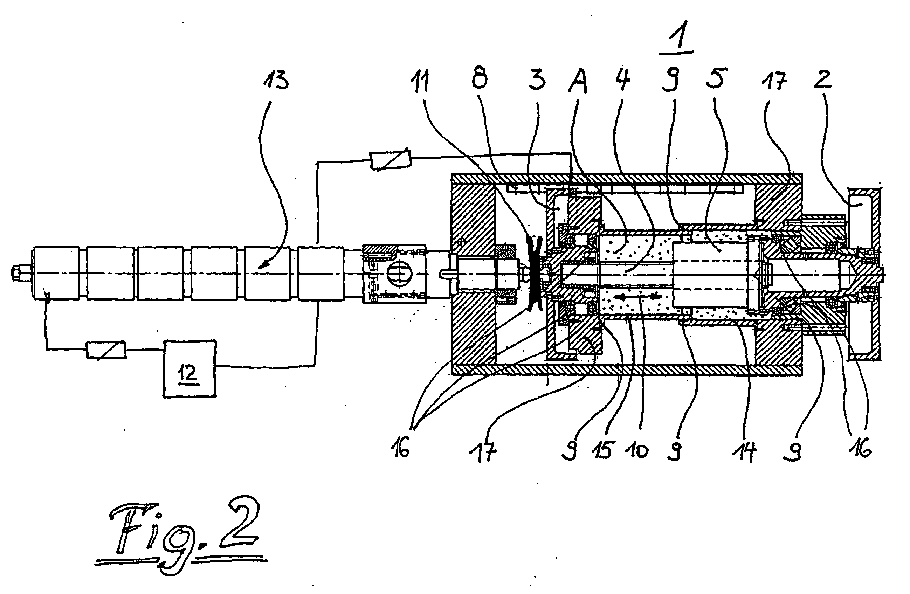

In Figur 1 sind in perspektivischer Anordnung die wesentlichen Bestandteile des Einspritzaggregates 1 dargestellt. Die beiden Motore 6 und 7 für den Antrieb der beiden Riemenscheiben 2 und 3 sind in einer Ebene mit der Schnecke 13 angeordnet. Durch gegengleiches Drehen oder Drehen mit unterschiedlicher Drehzahl der Motore 6 und 7 wird die Spindel 4 in bzw. aus der Spindelmutter 5 bewegt und folglich die Schnecke 13 axial verschoben. Der Raum A bzw. die den Raum A bildenden Teile sind in Figur 1 aus Gründen der Übersichtlichkeit nicht gezeigt. Dieser erfindungswesentliche Teil ist in Figur 2 detaillierter dargestellt.

Figur 2 zeigt ebenfalls das Einspritzaggregat 1. Die beiden Riemenscheiben 2 und 3 sowie die Schnecke 13 liegen ebenso wie die Spindel 4 und die Spindelmutter 5 auf einer Achse und können somit direkt zusammen wirken. Ist die Drehrichtung und die Drehzahl der Riemenscheiben (2, 3) gleich, findet keine axiale Verschiebung der Schnecke 13 statt. Bei Drehrichtungs- bzw. Drehzahlunterschied wird die Spindel 4 in bzw. aus der Spindelmutter 5 gedreht. Das Riemenrad 3 sowie die diesseitige Traverse 17 mit Motor 7 und die mit dem Riemenrad 3 verbundene Schnecke 13 wird in Pfeilrichtung 10 verschoben. Ein Führen der gesamten Einheit ist über eine entsprechend ausgeführte Schiene 8 gewährleistet.

Bei dieser Verschiebung wird die Hülse 15 in bzw. aus der Hülse 14 bewegt. Durch diese teleskopartige Bewegung wird der Raum A, der über die Hülsen 14 und 15 und die angrenzenden Traversen 17 gebildet wird, verkleinert oder vergrößert. Hierdurch wird das im Raum A befindliche Schmiermittel, z.B. Öl, bewegt, quasi umgepumpt, und sorgt so für eine ausreichende Schmierung der Lagerstellen 16. Der Raum A ist über Dichtmittel 9, vorzugsweise O-Ringdichtungen, mindestens schmiermitteldicht ausgeführt.

Die Ist-Kenngrößen wie Position der Schnecke 13 oder Lage der Riemenscheibe 3 etc. kann über geeignete handelsübliche Meßaufnehmer ermittelt werden und über die Maschinensteuerung 12 ausgewertet werden und beispielsweise als Eingangsgröße für die Drehzahlregelung der Motore 7 und 6 weiterverarbeitet werden.

Über die schematisch dargestellte Kupplung 11 kann das Drehmoment auf die Schnecke 13 unterbunden werden und somit trotz laufender Motoren 6 und 7 bei einem ausgeübten Axialhub der Schnecke 13 deren Drehen wirksam verhindert werden.

### Bezugszeichenliste:

- 1: Einspritzaggregat
- 2: erstes Riemenrad
- 3: zweites Riemenrad
- 4: Spindel
- 5: Spindelmutter
- 6: Motor für erstes Riemenrad 2
- 7: Motor für zweites Riemenrad 3
- 8: Führung für zweites Riemenrad 3 und Motor 7
- 9: Dichtmittel
- 10: Verschieberichtung der Spindel 4
- 11: Kupplung
- 12: Maschinensteuerung
- 13: Schnecke
- 14: erste Hülse
- 15: zweite Hülse
- 16: Lagerstellen
- 17: Traverse

- A: öldurchzogener Raum

## Patentansprüche

1. Einspritzaggregat für eine Spritzgießmaschine zur Verarbeitung von vorzugsweise thermoplastischem Material mit im wesentlichen einem Schneckenzylinder, einer Schnecke (13) und einem aus zwei Elektromotoren (6, 7) bestehenden Schneckenantrieb,
wobei beide Motore (6, 7) zum Durchführen des Einspritz- und Dosiervorganges in elektrischer Regelverbindung stehen,
wobei die beiden Motore (6, 7) gleichzeitig in der selben oder einer gegenläufigen Drehrichtung betrieben werden können,
**dadurch gekennzeichnet,**
**daß** ein Raum (A) im wesentlichen durch mindestens zwei zueinander beweglich angeordnete Hülsen (14, 15) und einer jeweils angrenzenden Traverse (17) gebildet wird, um Schmieröl aufzunehmen,
wobei die Hülsen (14, 15) ineinander gleitbar sind und
die Verbindungen der den Raum (A) bildenden Teil (14, 15, 17) zur Umgebung mindestens schmiermitteldicht ausgeführt sind,
wobei eine Verschiebung der Hülsen (14, 15) nur erfolgt, wenn ein Drehrichtungs- oder ein Drehzahlunterschied zwischen den mit den Motoren (6, 7) in Verbindung stehenden Riemenscheiben (2, 3) besteht.

2. Einspritzaggregat nach Anspruch 1, **dadurch gekennzeichnet, daß** durch die Relativbewegung der Hülsen (14, 15) Schmiermittel zu Lagerstellen (16) gefördert wird.

3. Einspritzaggregat nach Anspruch 1 oder 2, **dadurch gekennzeichnet, daß** die Motore (6, 7) für die Riemenräder (2, 3) so angeordnet sind, daß sie ohne Umlenkung auf die Achse der Schnecke (13) wirken können.

4. Einspritzaggregat nach mindestens einem der vorigen Ansprüche, **dadurch gekennzeichnet, daß** eine Kupplung (11) zwischen Schnecke (13) und Spindeleinheit vorgesehen ist, die während der Axialbewegung der Spindel (4) ein Rotieren der Schnecke (13) verhindert.

5. Einspritzaggregat nach mindestens einem der vorigen Ansprüche, **dadurch gekennzeichnet, daß** mindestens die Kombination aus Riemenrad (3) und Motor (7) beim Verschieben in Verschieberichtung (10) in einer Führung (8) geführt wird.

## Claims

1. Injection unit for an injection-moulding machine for processing of preferably thermoplastic material having essentially a screw cylinder, a screw (13) and a screw drive consisting of two electromotors (6, 7), wherein both motors (6, 7) are in electrical regulating connection for carrying out the injection and metering process, wherein the two motors (6, 7) may be operated at the same time in the same or an opposite direction of rotation, **characterised in that** a gap (A) is formed essentially by at least two sleeves (14, 15) arranged to be movable with respect to one another and an in each case adjoining crossbeam (17), in order to receive lubricating oil, wherein the sleeves (14, 15) can be slid into one another and the connections of the part (14, 15, 17) forming the gap (A) are designed for surrounding at least in a lubricant-tight manner, wherein displacement of the sleeves (14, 15) only takes place when a difference in direction of rotation or a difference in speed exists between the belt pulleys (2, 3) connected to the motors (6, 7).

2. Injection unit according to claim 1, **characterised in that** lubricant is conveyed to bearings (16) by the relative movement of the sleeves (14, 15).

3. Injection unit according to claim 1 or 2, **characterised in that** the motors (6, 7) for the belt pulleys (2, 3) are arranged so that they may act without deflection onto the axis of the screw (13).

4. Injection unit according to at least one of the previous claims, **characterised in that** a coupling (11) is provided between screw (13) and spindle unit, which prevents rotation of the screw (13) during the axial movement of the spindle (4).

5. Injection unit according to at least one of the previous claims, **characterised in that** at least the combination of belt pulley (3) and motor (7) is guided in a guide (8) during displacement in displacement direction (10).

## Revendications

1. Dispositif d'injection pour machine à mouler par injection pour la mise en oeuvre de matière de préférence thermoplastique, comprenant essentiellement un cylindre à vis, une vis (13) et un dispositif d'entraînement de vis constitué de deux moteurs électriques (6, 7),
les deux moteurs (6, 7) étant, pour l'exécution de l'opération d'injection et de dosage, en liaison électrique de régulation,
les deux moteurs (6, 7) pouvant être soumis à rotation simultanément dans le même sens ou en sens contraire,
**caractérisé par le fait**
**qu'**un espace (A) destiné à recevoir de l'huile lubrifiante est formé essentiellement par au moins deux douilles montées mobiles l'une par rapport à l'autre (14, 15) et une traverse contiguë respective (17),
les douilles (14, 15) pouvant coulisser l'une dans l'autre et
les jonctions avec l'environnement des parties (14, 15, 17) qui forment l'espace (A) étant réalisées au moins étanches aux lubrifiants,
un déplacement des douilles (14, 15) ayant lieu seulement lorsqu'il existe une différence de sens ou de vitesse de rotation entre les poulies à courroie (2, 3) reliées aux moteurs (6, 7).

2. Dispositif d'injection selon la revendication 1, **caractérisé par le fait que** le mouvement relatif des douilles (14, 15) amène du lubrifiant aux paliers (16).

3. Dispositif d'injection selon l'une des revendications 1 et 2, **caractérisé par le fait que** les moteurs (6, 7) pour les roues à courroie (2, 3) sont placés de façon à pouvoir agir sans renvoi sur l'axe de la vis (13).

4. Dispositif d'injection selon au moins une des revendications précédentes, **caractérisé par le fait qu'**entre la vis (11) et l'ensemble de broche est prévu un embrayage (11) qui empêche une rotation de la vis (13) pendant le mouvement axial de la broche (4).

5. Dispositif d'injection selon au moins une des revendications précédentes, **caractérisé par le fait qu'**au moins la combinaison de la roue à courroie (3) et du moteur (7) est, lors du déplacement, guidée dans un guidage (8) dans la direction de déplacement (10).
